# EUROPEAN PATENT APPLICATION

(11) **EP 2 754 901 A2**
(43) Date of publication of application: **16.07.2014**
(21) Application number: 14150934.9
(22) Date of filing: 13.01.2014
(51) Int. Cl.: F16B 7/04

(54) **Trampoline frame pipe connector for interconnecting two frame pipe parts of a trampoline**

(30) Priority: 14.01.2013 NL 2010122
(71) Applicant: Berg Toys Beheer B.V., 6716 WB Ede (NL)
(72) Inventor: van den Berg, Hendrik, 6716 WB Ede (NL); Akveld, Wessel Anton Caspar, 6716 WB Ede (NL); van Arragon, Charlotte Willemijn, 6716 WB Ede (NL)
(74) Representative: Jansen, Cornelis Marinus

(57) **Abstract**

Trampoline frame pipe connector (1) for interconnecting two frame pipe parts (2, 3) of a trampoline frame (4), wherein the connector (1) comprises an internal connector element (6) for at least partial insertion into one of opposing frame pipe part ends (2a, 3a) of the respective pipe parts (2, 3), and an external connector element (7) that cooperates with the internal connector element (6) to secure both frame pipe parts (2, 3) with respect to each other, wherein the external connector element (7) comprises at least one opening (20) for receiving a connecting pin (11), wherein the internal connector element (6) comprises at least one opening (9) substantially opposite the opening (20) of the external connector element (7) for receiving said connecting pin (11), wherein said least one opening (9) comprises a securing member (10) for removably securing the connecting pin (11) that extends through the respective openings (20, 9).

## Description

### Field of the invention

The invention relates to a trampoline frame pipe connector for interconnecting two frame pipe parts of a trampoline frame that are in line. More in particular, the invention relates to a trampoline frame pipe connector for tightly connecting a first frame pipe part end of a trampoline frame to a second frame pipe part end.

### Background of the invention

A trampoline comprises a trampoline frame having a top rail and a plurality of frame legs for solidly supporting the trampoline frame. The top rail may comprise a number of pipe parts that are interconnected to form the substantially circular top rail. The parts may be interconnected by insertion of one of the ends of a first pipe part into an end of a second pipe part that is in line with the first part. To provide a connection between the respective frame pipe parts a connector may be used. Such a connector is for instance known from WO2012/003636 and comprises a frame pipe connecting structure for a trampoline. The structure comprises a three way component having a horizontal pipe portion for receiving two frame pipes at opposing ends of the horizontal pipe portion. The three way component further comprises a vertical pipe portion for receiving a foot pipe. In the three-way component a positioning groove is provided for cooperation with a positioning slot provided on the frame pipe. The three-way component also comprises protrusions that are provided for cooperation with connecting holes in the frame pipes. Besides, the three-way component and the pipes comprise bolt holes for receiving bolts. The bolts are fastened by nuts when passed through the bolt holes. A drawback of such a known connector may be the fact that clearance may occur. However, to be able to comply with safety measures for a trampoline it is desired to minimize clearance between the different trampoline frame parts and thus between the frame parts and the connector such that a solid trampoline frame may be provided.

Therefore, the present invention aims to provide an improved trampoline frame pipe connector of the above-described type, wherein the drawbacks are at least partly overcome. More in particular, it is an object of the invention to provide a trampoline frame pipe connector that can be used to interconnect two frame pipes such that solid connection is provided while at the same time minimizing clearance between the respective parts of the connector and/or the trampoline frame.

### Summary of the invention

Thereto, according to a first aspect of the invention, a trampoline frame pipe connector for interconnecting two frame pipe parts of a trampoline that are in line is provided, wherein the connector comprises an internal connector element for at least partial insertion into one of opposing frame pipe part ends of the respective pipe parts, and an external connector element that cooperates with the internal connector element to secure both frame pipe parts with respect to each other. Therefore, the external connector element comprises at least one opening for receiving a connecting pin, and the internal connector element comprises at least one opening substantially opposite the opening of the external connector element for receiving said connecting pin. The at least one opening of the internal connector element comprises a securing member for removably securing the connecting pin that extends through the respective openings.

With such a trampoline frame pipe connector, the respective frame pipe ends may be fixed to each other after being telescoped due to a clamping force between the internal connector element and the external element. In fact, both frame pipe ends are clamped in between said internal and external connector elements. Due to such clamping force, the outer surface of the first pipe part end is pressed against the inner surface of the second pipe part end. Therefore, the contact area between both pipe parts is maximized and thus clearance between the respective pipe parts is minimized. Consequently, the connector provides for a solid connection between two frame pipe parts which results in a solid trampoline frame.

To be able to secure the connection between the respective pipe parts, it is advantageous according to a further aspect of the invention that the securing member comprises an inner thread that is configured to cooperate with an outer thread provided on the connecting pin. When inserting the connecting pin in the securing member and tightening of the pin in the member, the internal connector element as well as the external connector element is drawn to the respective opposing surface of the frame pipe. The securing member may for instance comprise a nut that is mounted to the internal connector element and the connecting pin may be a bolt.

In further elaboration of the invention, the internal connector element may comprise a substantially elongate body that comprises at a first end thereof a retainer to retain the connector against a perimeter edge of the first frame pipe end. The retainer may for instance extend from the outer surface of the elongate body to provide the body, for instance locally, with a slightly larger diameter that is also larger than an inner diameter of the internal connector element. When inserting the internal connector element in the first pipe part, the inserting movement is stopped at the moment the retainer contacts the perimeter edge of the pipe part. The retainer thus also enables correct positioning of the internal connector element in the first pipe part.

To further enhance proper positioning of the element and to enable easy insertion of the internal connector element into the first pipe part, the internal connector element may, according to a further aspect of the invention, be provided, a at a second end opposite the first end, with at least two spring members that are, in the inserted position, biased against an inner wall of the first frame pipe part end to retract the internal connector element in an inserted position inside the first pipe part end.

In further elaboration of the invention, the internal connector element may be of a strip like element that has a substantially U-shape. Such a construction of the internal connector element enables easy manufacturing thereof. Besides, due to the use of the strip like element to manufacture the internal connector element, the spring members may be easily formed by the two legs of the U-shaped strip like element that may act as leave springs,. Furthermore, the extremities of the legs may be slightly bent outward. Preferably, the first pipe part end has a substantially conical shape, i.e. tapers towards the end surface pipe part end. When inserting the internal connector element, the spring members, at least the corresponding outwardly extending extremities, will react against the inner wall of the frame pipe part end and consequently, the internal connector element is moved further inward.

Preferably, the internal connector element, seen in a transversal cross sectional direction, has rounded edges to cooperate with inner corners of the first frame pipe part. The rounded edges enable easy positioning of the internal connector element into the inner space of the first pipe part and minimizing the space between the wall of the internal connector element that houses the securing member and the opposing inner surface of the first pipe part.

In order to ease removal of the internal connector element from the first pipe part, the internal connector element may, according to a further aspect of the invention, be provided withdrawal member the first end of the connector element. This withdrawal member may be an opening provided in the first end wall or a protrusion or other suitable member.

In further elaboration of the invention, the external connector element has a substantially T-shaped body having a first receiving section with two opposing ends and a second receiving section arranged substantially perpendicular to the first receiving section comprising a third end, wherein the two opposing ends are configured to cooperate with an outer surface of the respective frame pipe parts, and wherein the third end is configured to receive an end of a trampoline frame leg. With such a construction of the external connector element, the frame legs of the trampoline may be attached to the top rail, i.e. the rail formed by the interconnected frame pipe parts, in an easy manner.

Preferably, the third end of the external connector element may comprise two substantially elongate curved parts extending away from the first receiving section, wherein the longitudinally extending edges of said respective parts are serrated such that opposing serrated edges cooperate with each other. Due to the serrated edges, the two parts are automatically positioned in the predetermined manner upon mounting of the frame leg in the third end of the external connector element. This may be advantageous during assembling of the trampoline frame. Upon bringing the elongate parts and thus the serrated edges together, a form lock is obtained. Due to such a form lock, the elongate parts will not displace with respect to each other in longitudinal direction. Consequently, the cross sectional shape of the first receiving section of the external connector element will not deform and will remain a substantially square shape, even when applying force, for instance when using the trampoline. Consequently, the construction between the frame legs and the top rail will be a stiff construction in both horizontal planes (i.e. as well in x- and y-direction) and thus, the position of the frame legs with regard to the top rail will remain substantially perpendicular to the plane extending through the top rail.

In order to enhance the stiffness of the connector, it may be advantageous according to another aspect of the invention, if the transitional area between the first receiving section and the second receiving section comprises a reinforcement. Furthermore, since the elongate curved parts of the external connector element are brought together, the reinforcements will move towards the lower wall of the second frame part end and press against said lower wall such that the lower wall will deform. The lower wall of the second frame part in turn will press against the lower wall of the first frame part end and deform said wall. Due to said deformations, the stiffness of the connection between the external connector element and the first and second frame part ends will be increased even more.

The invention further relates to a frame pipe connector assembly comprising the above described frame pipe connector and an adapter that extends from the connector and is configured to receive a frame pipe part of a trampoline safety net. Such assembly enables easy mounting of a further frame pipe part such as a trampoline safety net. The adapter may be mounted to the connector but in a different embodiment, the connector and the adapter may instead be provided as an integrally formed single piece.

The invention also relates to a trampoline frame comprising at least one above described frame pipe connector or a frame pipe connector assembly and to a trampoline comprising such a trampoline frame. Such trampoline frame and trampoline provide similar effects and advantages as described with the trampoline frame pipe connector.

Further advantageous embodiments of a trampoline frame pipe connector, the above described assembly; the trampoline frame and trampoline according to the invention are set forth in the dependent claims.

### Brief description of the drawings

The invention will now be further elucidated by means of, nonlimiting, examples referring to the drawing, in which
Fig. 1 shows a schematic perspective view of an example of the trampoline frame pipe connector according to the invention;
Fig. 2 shows a schematic transversal cross sectional view of the connector shown in Fig. 1;
Fig. 3 shows a schematic perspective view of an internal connector part of the connector shown in Fig. 1 partly inserted in a frame pipe part;
Fig. 4 shows a schematic perspective view of the internal connector part of Fig. 3;
Fig. 5 shows a schematic side view of the connector of Fig. 1;
Fig. 6 shows a schematic front view of the connector of Fig. 1;
Fig. 7 shows a schematic transversal cross sectional view of the connector as shown in Fig. 6 thereby showing a cross section of the external connector element and the second frame part end;
Fig. 8 shows a schematic perspective view of an assembly of the connector 1 according to the invention and an adapter.

It is noted that identical or corresponding elements in the different drawings are indicated with identical or corresponding reference numerals.

### Detailed description of the invention

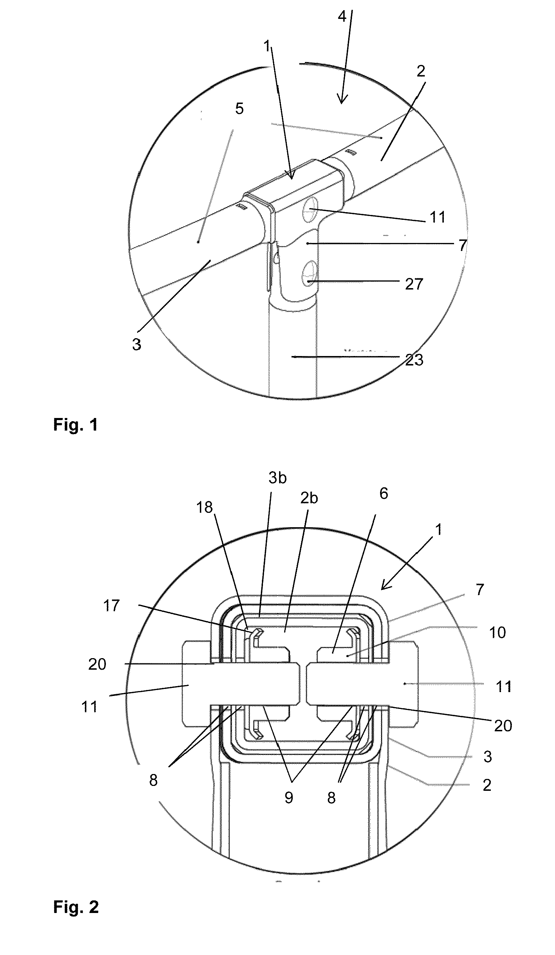

In Fig. 1 a trampoline frame pipe connector 1 for interconnecting two frame pipe parts 2, 3 of a trampoline frame 4 according to an embodiment of the invention is shown. The two frame pipe parts 2, 3 are part of the top rail 5 of a trampoline. The top rail 5 is configured to hold the trampoline mat (not shown). Usually, the top rail 5 comprises multiple frame pipe parts 2, 3, for instance eight parts, that are in line to form a substantially circular top rail 5. The connector 1 according to the invention is used to provide a solid connection between the respective frame pipe parts 2, 3. Thus, the trampoline frame 4 may comprise eight trampoline frame pipe connectors 1. Usually, the trampoline frame 4 is equipped with four frame supports each having two legs interconnected to the top rail 5.

The connector 1 according to the invention comprises an internal connector element 6 and an external connector element 7 (see also Fig. 2).

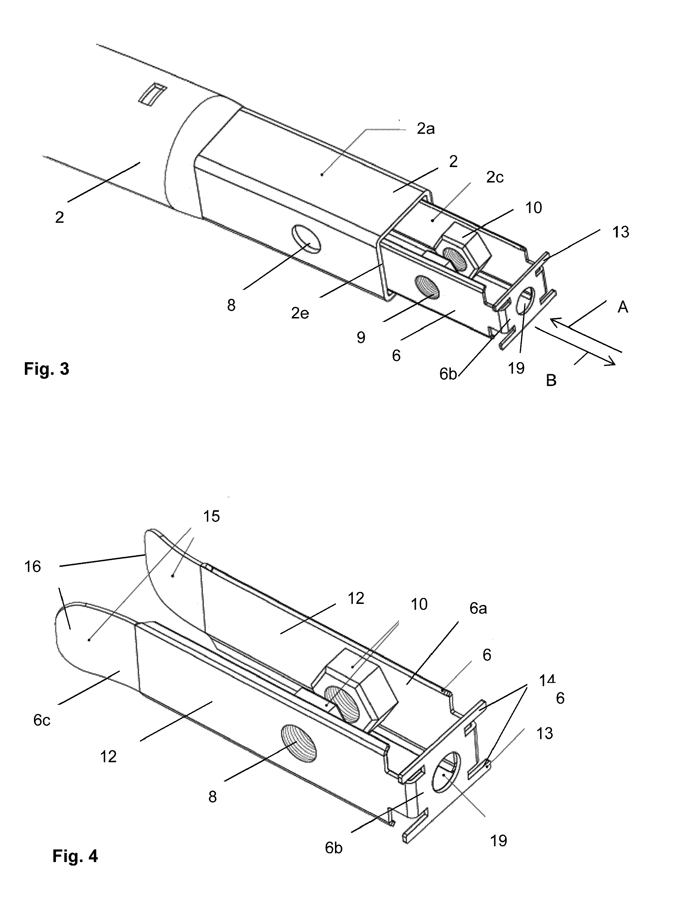

In a mounted state of the trampoline frame 4, the internal connector element 6 is inserted, at least partly, in the inner space 2a of an end 2b of the first frame pipe part 2. The end 2b of the first frame pipe part 2 including the internal connector element 6 is inserted in the inner space 3a of the end 3b of the second frame pipe part 3. To position the respective ends 2a, 3a with respect to each other, the frame pipe part ends 2a, 3a may have a substantially square transversal cross sectional shape (see Figs. 2 and 3). The respective ends 2a, 3a of the frame pipe parts 2, 3 are provided with at least one opening 8, in the shown embodiment with two opposing openings 8. The internal connector element 6 also comprises two opposing openings 9 that are positioned opposite the openings 8 of the first frame pipe part end 2a. The openings 9 of the internal connector element 6 are provided with securing members 10, in the shown embodiment, provided at an inner surface 2c (see Figs. 3 and 4) of the internal connecting element 6. The securing members 10 are formed by a nut having an inner thread that is mounted to the body 6a of the internal connector element 6, which nut is configured to cooperate with the connecting pin 11 to secure the respective parts of the connector 1 and the pipe parts 2, 3 tightly to each other. Therefore, the connecting pin 11 is provided with an external thread that cooperates with the internal thread of the securing member 10. The body 6a of the internal connector element 6 has a substantially elongate shape (see Fig. 4). In the shown embodiment, the body 6a is formed by an elongate strip material that is bent in a U-shape. The legs 12 of the internal connector element 6 extend from the first end 6b of the body 6a towards a second end 6c of the body 6a. At the first end 6b, the internal connector element 6 is provided with a retainer 13. In the example of the internal connector element 6 as shown in Fig. 4, the retainer 13 comprises multiple protrusions 14 that extend outward from the perimeter edge 2e of the first frame pipe part end (2a), seen in a transversal cross sectional direction (indicated with arrow A in Fig. 3). The retainer 13 prevents the internal connector element 6 from being inserted too far in the frame pipe part 2. At the second end 6c of the body 6a of the internal connector element 6, two spring members 15 are provided. In the shown embodiment, these spring members 15 are formed by the outwardly extending extremities 16 of the respective legs 12 in combination with the legs 12 that behave as leaf springs. Preferably, the first frame pipe part end 2b has a substantially conical shape, i.e. tapers towards the perimeter edge 2e. The spring members 15 are biased such that the internal connector element 6 is retracted automatically in the correct predetermined positioned inside the inner space 2b of the first frame pipe part end 2a since the spring members 15 will react against the conical inner wall of the frame pipe part end 2b when the connector element 6 is inserted in said pipe part end 2a and almost reaches said predetermined end position. The elongate body 6a of the internal connector element 6 has rounded edges 17 (seen in transversal cross sectional direction (indicated with arrow A in Fig. 4) that cooperate with the inner corners 18 of the first frame pipe part 2 (see Fig. 2).

In the first end 6b of the internal connector element 6 a withdrawal member 19 is provided for enabling easy removal of the inserted internal connector element 6 from the inner space 2b of the first frame pipe part 2. In the shown example, the withdrawal member 19 comprises an opening that enables inserting a retractor (not shown) to retract the inserted internal connector element 6 in direction B (see Fig. 3).

The external connector element 7 (see Figs. 1, 5, 6 and 7) is configured to cooperate with the internal connector element 6. Therefore, the external connector element 7 comprises at least one opening 20, in the shown embodiment two opposing openings 20 for receiving the connecting pin 11 (see also Fig. 2). In the mounted position of the external connector element 7, the openings 20 are provided opposite the corresponding openings 8, 9 of the pipe parts 2, 3 and the internal connector element 6. After inserting the first frame pipe part end 2a in the second frame pipe part end 3a, the external connector element 7 is provided to enclose the pipe part ends 2a, 3a. To connecting pins 11 are inserted in the respective openings 20 of the external connector element 7, wherein each pin 11 subsequently extends through said opening 20, the openings 8 provided in the second frame pipe part end 3a and in the first frame pipe part end 2a and through the opening 9 in the internal connector element 6. The connecting pin 11 is tightened by inserting the external thread of the pin 11 into the internal thread of the securing member 10. By doing so, the internal connector element 6 and the external connector element 7 are drawn towards each other, thereby clamping both frame pipe part ends 2a, 3a in between.

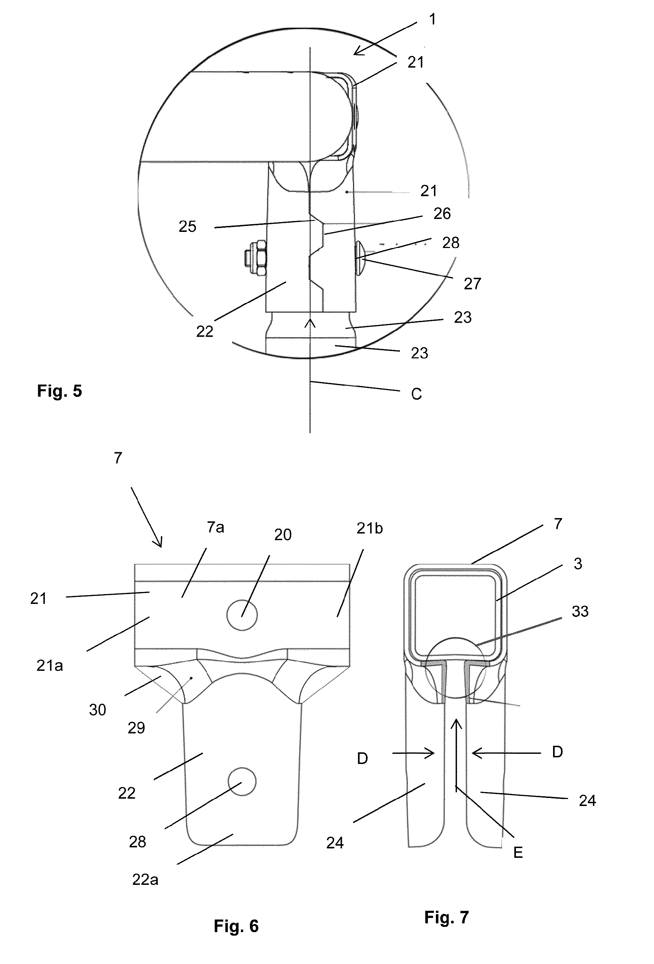

The external connector element 7 has a substantially T-shaped body 7a (see Fig. 6). The T-shaped body 7a has a first receiving section 21 having two opposing ends 21a, 21b configured for receiving the respective ends 2a, 3a of the frame pipe parts 2, 3 and a second receiving section 22 that is arranged substantially perpendicular to the first receiving section 21 such that a third end 22a of the body 7a extends away from the first receiving section 21 and is configured to receive a further frame pipe end 23a (see Figs. 1 and 5) for instance of a frame leg 23.

The third end 22a of the body 7a is formed by two substantially elongate parts 24 that are curved along the entire length of said parts 24 (i.e. seen in a direction parallel to a central axis C of the second receiving section 22). The elongate parts 24 each have to longitudinally extending edges 25, 26, that are serrated. The serrated edges 25, 26 are configured to cooperate with each other such that upon tightening of another connecting pin 27, that extends through a further opening 28 (see Fig. 6) provided in the external connector element 7 at a distance of the first openings 20, the serrated edges 25 of one of the parts 24 engage with the serrated edges 26 of the other one of the parts 24 to form a substantially closed pipe end (see Fig. 5). The serrated edges 25, 26 prevent displacement of the parts 24 with respect to each other in longitudinal direction.

Preferably, the external connector element 7 is provided with reinforcements 29 that are provided in a transitional area 30 between the first receiving section 21 and the second receiving section 22. The reinforcements 29 enhance the stiffness of the external connector element 7 and thus of the entire connector 1 according to the invention. Besides, upon tightening of the connecting pin 27, thus during displacement of the respective elongate parts 24 towards each other (indicated by arrows D in Fig. 7), the reinforcements 29 are forced against at least the second frame pipe part end 3a (indicated by arrow E in Fig. 7). This results in the frame pipe part 3 being impressed thereby removing any clearance between the separate parts of the connector 1 as a result of what the connector 1 provides a solid, stiff connection between the different frame pipe parts.

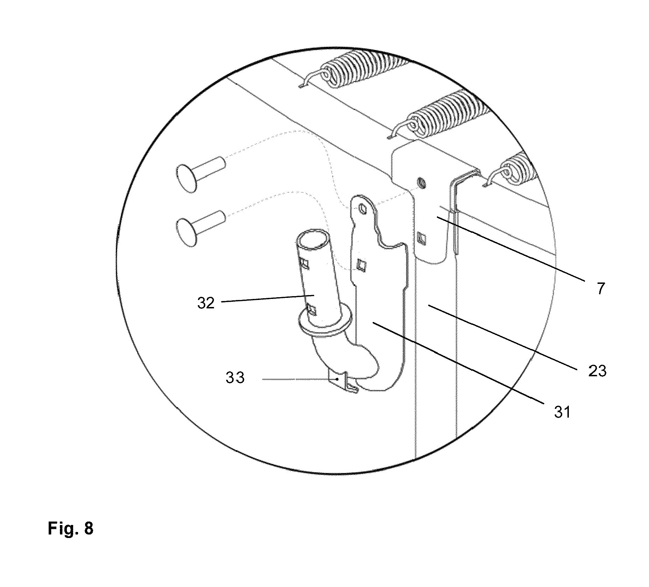

The external connector element 7 may be provided with an adapter 31 (see Fig. 8) that may be mounted to said element 7 and comprise a further receiving section 32 for receiving a frame pipe part of for instance a trampoline safety net. The adapter 31 may be removably connected or may be, together with the external connector element 7 be integrally formed as a single piece. The adapter 31 may comprise further coupling means 33 for instance for connecting other trampoline parts thereto, for instance a safety net. In an alternative embodiment of the invention, the adapter 31 and the connector 1, at least the external connector element 7 may be integrally formed as a single piece, for instance depending on the manufacturing method used to manufacture the connector 1.

In the foregoing specification, the invention has been described with reference to specific examples of embodiments of the invention. It will, however, be evident that various modifications and changes may be made therein without departing from the broader spirit and scope of the invention as set forth in the appended claims.

It is for instance possible that the internal connector element and/or the external connector element are/is of a different construction.

The shape and/or dimensions of said elements may vary as long as the elements are configured to cooperate in the manner as above described.

Furthermore, the securing member may comprise different elements to secure the connecting pin tightly in the openings provided in the internal connector element.

The connecting pin may have different constructions as long as the securing member and the connecting pin are configured for being interconnected to clamp the respective frame pipe part ends there between.

The different connector parts may be of different materials and may be manufactured in different ways.

However, other modifications, variations and alternatives are also possible. The specifications, drawings and examples are, accordingly, to be regarded in an illustrative rather than in a restrictive sense.

In the claims, any reference signs placed between parentheses shall not be construed as limiting the claim. The word 'comprising' does not exclude the presence of other features or steps then those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage.

## Claims

1. Trampoline frame pipe connector (1) for interconnecting two frame pipe parts (2, 3) of a trampoline frame (4) that are in line, wherein the connector (1) comprises:
- an internal connector element (6) for at least partial insertion into one of opposing frame pipe part ends (2a, 3a) of the respective pipe parts (2, 3), and
- an external connector element (7) that cooperates with the internal connector element (6) to secure both frame pipe parts (2, 3) with respect to each other,
wherein the external connector element (7) comprises at least one opening (20) for receiving a connecting pin (11), wherein the internal connector element (6) comprises at least one opening (9) substantially opposite the opening (20) of the external connector element (7) for receiving said connecting pin (11), wherein the at least one opening (9) of the internal connector element (6) comprises a securing member (10) for removably securing the connecting pin (11) that extends through the respective openings (20, 9).

2. Frame pipe connector according to claim 1, wherein the securing member (10) comprises an inner thread that is configured to cooperate with an outer thread provided on the connecting pin (11).

3. Frame pipe connector according to claim 1 or 2, wherein the internal connector element (6) comprises a substantially elongate body (6a) comprising at a first end (6b) a retainer (13) to retain the connector (6) against a perimeter edge (2e) of the first frame pipe end (2a), preferably wherein the internal connector element (6) is provided, at a second end (6c) opposite the first end (6b), with at least two spring members (15) that are biased to retract the internal connector element (6) in an inserted position.

4. Frame pipe connector according to any one of claims 1 - 3, wherein the internal connector element (6) is of a strip like element having a substantially U-shape.

5. Frame pipe connector according to any one of claims 3-4, wherein the spring members (15) are formed by two legs (12) of the U-shaped strip like element, that act as leaf springs.

6. Frame pipe connector according to any one of claims 1-5, wherein the internal connector element (6), seen in a transversal cross sectional direction, has rounded edges (17) to cooperate with inner corners (18) of the first frame pipe part (2).

7. Frame pipe connector according to any one of the preceding claims, wherein the internal connector element (6) is provided with a withdrawal member (19 at a first end (6b).

8. Frame pipe connector (1) according to any one of the preceding claims, wherein the external connector element (7) has a substantially T-shaped body (7a) having a first receiving section (21) with two opposing ends (21a, 21b) and a second receiving section (22) arranged substantially perpendicular to the first receiving section (21) comprising a third end (22a), wherein the two opposing ends (21a, 21b) are configured to cooperate with an outer surface of the respective frame pipe parts (2, 3) and wherein the third end (22a) is configured to receive an end (23a) of a trampoline frame leg (23).

9. Frame pipe connector according to claim 8, wherein the third end (22a) comprises two substantially elongate curved parts (24) extending away from the first receiving section (21), wherein the longitudinally extending edges (25, 26) of said respective parts (24) are serrated such that opposing serrated edges (25, 26) cooperate with each other.

10. Frame pipe connector according to claim 8 or 9, wherein a transitional area (30) between the first receiving section (21) and the second receiving section (22) comprises a reinforcement (29).

11. Frame pipe connector assembly comprising a frame pipe connector (1) according to any one of the preceding claims, wherein the assembly further comprises an adapter (31) extending from the connector (1) and configured to receive a frame pipe part of, for instance a trampoline safety net, preferably wherein the adapter (31) and the external connector element (7) are provided as an integrally formed single piece.

12. Trampoline frame comprising at least one trampoline frame pipe connector (1) according to any one of the claims 1-10 or a frame pipe connector assembly according to claim 11,

13. Trampoline frame according to claim 12, wherein the first frame pipe part (2) is connected to the second frame pipe part (3) that is in line with the first frame pipe part (2), wherein the end (2a) of the first pipe part (2) is inserted in the end (3a) of the second pipe part (3), wherein the internal connector element (6) at least extends in the end (2a) of the first pipe part (2) such that the at least one opening (9) in said part is provided opposite of openings (8) provided in the respective first and second pipe parts (2, 3), wherein the external connector part (7) is provided around an outer surface of the end (3a) of the second pipe part (3) such that the at least one opening (20) in the external connector part (7) is provided opposite the opening (9) in the internal connector element (6), wherein the connecting pin (11) extends through the respective openings (20, 8, 9) and is removably secured to the securing member (10) provided in the internal connector element (6), preferably wherein the first frame part end (2b) has a substantially conical shape (i.e. tapers towards the perimeter edge (2e) thereof), to enhance insertion and/or positioning of the internal connector element (6) inside the first frame pipe part (2).

14. Trampoline frame according to claim 13, wherein in the third end (22a) of the external connector element (7) an end (23a) of the frame leg (23) is received, wherein a further connecting pin (27) extends through the external connector element (7) and the frame leg (23) such that the two opposing substantially elongate curved parts (24) are drawn towards each other such that the reinforcements (29) are forced against the outer surface of the second frame pipe part (3).

15. Trampoline comprising a trampoline frame according to any one of claims 12-14.
